# EUROPÄISCHE PATENTSCHRIFT

(11) **EP 2 065 411 B1**
(45) Veröffentlichungstag und Bekanntmachung des Hinweises auf die Patenterteilung: **25.01.2012**
(21) Anmeldenummer: 08020051.2
(22) Anmeldetag: 18.11.2008
(51) Int. Cl.: C08F 255/02, C08F 8/12, C08F 8/44, C08L 91/06, C08L 51/06, C09D 151/06

(54) **Wachsartige Ionomere**
Waxy ionomers
Ionomères de type cire

(30) Priorität: 23.11.2007 DE 102007056533
(43) Veröffentlichungstag der Anmeldung: 03.06.2009
(73) Patentinhaber: Clariant Finance (BVI) Limited, Road Town, Tortola (VG)
(72) Erfinder: Hohner, Gerd Dr., 86368 Gersthofen (DE)
(74) Vertreter: Hütter, Klaus

(56) Entgegenhaltungen:
- BE-A- 742 272
- DE-A1- 19 648 895
- US-A- 3 859 385
- US-A- 3 859 386

## Beschreibung

Die vorliegende Erfindung betrifft wachsartige lonomere ("lonomerwachse") mit niedriger Schmelzviskosität, hergestellt unter Verwendung von Umsetzungsprodukten von Polyethylen- oder Paraffinwachsen und α, ß-ungesättigten Carbonsäuren oder deren Derivaten.

lonomere basierend auf funktionalisierten, z. B. Carboxylgruppen enthaltenden Polyethylen-Strukturen sind bekannt. Zu ihrer Herstellung wird z. B. Säuregruppen enthaltendes Polyethylen, hergestellt durch Copolymerisation von Ethylen und α, β-ungesättigten Carbonsäuren, im Sinne einer Neutralisation oder Verseifung mit Metalloxiden oder -hydroxiden umgesetzt.

lonomere auf Polyethylenbasis finden Verwendung z. B. als Additive für Kunststoffe, etwa als Nukleierungsmittel zur Beeinflussung des Kristallisationsverhaltens und der Morphologie, als (permanent wirksame oder migrierende) Antistatika sowie als Verarbeitungshilfsmittel bei der Formgebung. Sie werden weiterhin als Pigmentdispergiermittel bei der Einfärbung von Kunststoffen mit organischen oder anorganischen Pigmenten eingesetzt. Aus Polyethylen-lonomeren können ferner Folien für Verpackungen und Beschichtungen hergestellt werden.

In US 3 264 272 werden lonomere beschrieben, die durch partielle Verseifung von kunststoffartigen Copolymeren aus Ethylen oder 1-Olefinen und Acrylsäure oder Methacrylsäure gewonnen werden. Bei der Verseifung wird ein drastischer Viskositätsanstieg beobachtet, erkennbar an der Abnahme des Schmelzindex-Wertes.

Aus EP 0 054 761 ist die Umsetzung von wachsartigen Ethylen-Acrylsäure-Copolymeren mit Metalloxiden oder -hydroxiden bekannt. Die Viskositäten der in den Ausführungsbeispielen eingesetzten Rohstoffe liegen bei 500 bzw. 650 mPa·s bei 140 °C, bei der Verseifung steigen die Viskositätswerte mit zunehmendem Verseifungsgrad auf ein Vielfaches an. Für Verseifungsgrade von mehr als 50 % werden keine Viskositätswerte mehr angegeben.

In EP 0 104 316 wird die Herstellung von niedermolekularen salzartigen Produkten durch Umsetzung von niedermolekularen Copolymeren aus Ethylen und α, β-ungesättigten Carbonsäuren mit Oxiden der Gruppe IIA des Periodensystems beschrieben. In den Ausführungsbeispielen wird für die Umsetzung ein EthylenAcrylsäure-Copolymer mit einem Acrylsäuregehalt von 3,9 mol.-% (Handelsname A-C 580) eingesetzt. Mit beginnender Reaktion steigt die Schmelzviskosität an.

Wachsartige lonomere können prinzipiell in einfacher Weise im Rührkesselverfahren durch Einrühren geeigneter Metallverbindungen in die Schmelze von funktionalisierten Wachsen hergestellt werden. Diese Verfahrensweise setzt voraus, dass die Viskosität während der Umsetzung ausreichend niedrig bleibt, um eine wirksame Durchmischung der Reaktionskomponenten zu gewährleisten bzw. eine Überlastung des Rührorgans zu vermeiden. Dieser Aspekt ist insbesondere dann von Bedeutung, wenn es zur Erzielung einer optimalen anwendungsstechnischen Effizienz der lonomeren erforderlich ist, hohe Neutralisations- oder Verseifungsgrade, z. B. solche nahe 100 % einzustellen. Die bisher bekannten auf funktionalisierten Polyethylenwachsen basierenden lonomere weisen bei höheren Verseifungsgraden extrem hohe Schmelzviskositäten auf oder sind nicht schmelzbar. Ihre technische Herstellung erfordert daher spezielle aufwendige Arbeitsweisen. Letzteres gilt gleichermaßen auch für ihre Anwendung, soweit diese über den schmelzflüssigen Zustand erfolgt.

Es besteht daher Bedarf nach einfach und wirtschaftlich zugänglichen und durch einen hohen Verseifungsgrad gekennzeichneten lonomeren mit gleichzeitig niedriger Schmelzviskosität.

Überraschend wurde gefunden, dass derartige lonomere durch Verseifung von Wachsen zugänglich sind, die durch radikalische Pfropfung mit α, β-ungesättigten Carbonsäuren funktionalisiert wurden. Insbesondere wird dabei unerwarteterweise auch bei vollständiger Verseifung bis zum maximalen Metallgehalt ein allenfalls nur mäßiger Anstieg der Schmelzviskosität beobachtet.

Die BE 742 272 beschreibt zwar schon die Pfropfung von Polypropylen mit niedriger Viskosität mit Acrylsäure in einem Extruder. Sie beschreibt aber nicht die Isolierung von Ionomerwachs, das daraus durch Umsetzung mit KOH hergestellt wird.

Die US-A 3 859 385 offenbart dem Fachmann die Pfropfung von Crotonsäure auf niedrigviskoses Polyethylenwachs. Sie beschreibt aber nicht die Verseifung des funktionalisierten Polyethylenwachses mit geeigneten Hydroxyden.

Die US-A 3 859 386 beschreibt in einem Ausführungsbeispiel zwar emulgierbares, säurefunktionalisiertes Polypropylenwachs, das durch Pfropfung von Propylenwachs mit Crotonsäure in Gegenwart von Peroxid als Katalysator hergestellt wurde. Sie gibt dem Fachmann aber nicht die Lehre, Ionomerwachse der erfindungsgemäßen Art herzustellen und zu isolieren. Diese entstehen allenfalls *in situ* bei der Zubereitung wässriger Emulsionen aus den gepfropften Wachsen, wenn sie zusammen mit Wasser, Emulgator und KOH vermischt und anschließend im Reaktor auf 180 °C erhitzt werden. Die Isolierung von Ionomerwachsen wird in der US-A nicht beschrieben, auch nicht deren physikalische Eigenschaften, sondern die US-A beschreibt nur, dass die Emulsion als Überzug auf schwarzes Glas aufgebracht wird und dort einen transparenten Film bildet, der einen exzellenten Glanz besitzt.

Gegenstand der Erfindung sind lonomerwachse mit einer Schmelzviskosität gemessen bei 140 °C, von kleiner als 5000 mPa·s und einem Tropf- oder Erweichungspunkt im Bereich von 70 bis 135 °C, enthaltend mit alpha, beta-ungesättigten Carbonsäuren oder deren Derivaten durch radikalische Pfropfung funktionalisierte und anschließend verseifte Polyethylen- oder Fischer-Tropsch-Wachse, deren Kennzeichenmerkmal darin zu sehen ist, dass mindestens 30 % der im funktionalisierten Wachs enthaltenen funktionellen Gruppen verseift sind.

Die lonomerwachse werden aus funktionalisierten Wachsen durch deren Umsetzung mit Metallverbindungen hergestellt, wobei die funktionalisierten Wachse durch radikalische Pfropfung von nicht funktionalisierten Polyethylen- oder Fischer-Tropsch-Wachsen mit α, β-ungesättigten Carbonsäuren oder deren Derivaten gewonnen wurden.

Carboxylgruppen enthaltende Polyethylene bzw. Polyethylenwachse sind außer durch oxidativen Abbau von Polyethylenen durch Copolymerisation von Ethylen mit ungesättigten Säuren oder durch Pfropfung von ungesättigten Säuren auf Ethylenpolymere zugänglich. Während im Falle der Copolymerisation die ungesättigte Carbonsäure in die Hauptkette des Polymermoleküls inkorporiert wird, erscheint bei der Pfropfung das Säuremolekül als Seitenkette. Die Pfropfung von Acrylsäure auf Polyethylenwachs ist zum Beispiel aus dem Dokument JP 08 - 269 140 bekannt.

Unter den als Propfgrundlage verwendeten Wachsen werden in Abgrenzung zu kunststoffartigern Polyethylen Materialien mit niedrigen mittleren Polymerisationsgraden oder Kettenlängen verstanden. Diese bedingen wiederum niedrige Schmelzviskositäten, die im Fall der Wachse, gemessen bei 140 °C, typischerweise im Bereich von etwa 5 bis 5.000 mPa·s, im Fall der Polyethylenkunststoffe dagegen in der Regel oberhalb 1.000 Pa·s liegen. Die physikalischen Eigenschaften der Wachse unterscheiden sich deutlich von denen der Polyethylen-Kunststoffe.

Polyethylenwachse können durch thermischen Abbau verzweigter oder unverzweigter Polyethylen-Kunststoffe oder im Aufbauprozess durch direkte Polymerisation von Ethylen hergestellt werden. Als Polymerisationsverfahren kommen beispielsweise radikalische Techniken in Frage, wobei Ethylen bei hohen Drucken und Temperaturen zu mehr oder minder verzweigten Wachsen umgesetzt wird; daneben sind Verfahren gebräuchlich, bei denen Ethylen, gegebenenfalls unter Zusatz von Comonomeren mit Hilfe metallorganischer Katalysatoren, beispielsweise Ziegler oder Metallocenkatalysatoren zu unverzweigten oder verzweigten Wachsen polymerisiert werden. Entsprechende Methoden zur Herstellung von Ethylen-Homo- und Copolymerwachsen sind beispielsweise in Ullmann's Encyclopedia of Industrial Chemistry, 5. Aufl., Vol. A 28, Weinheim 1996 in Kapitel 6.1.1./6.1.2.
(Hochdruckpolymerisation), Kap. 6.1.2. (Ziegler-Natta-Polymerisation, Polymerisation mit Metallocenkatalysatoren) sowie Kap. 6.1.4. (thermischer Abbau) beschrieben. Die Herstellung von Polyolefinwachsen mit Hilfe von Metallocenkatalysatoren beschreiben im Speziellen z. B. auch die Patentschriften EP 0 321 852, EP 0 384 264, EP 0 571 882 und EP 0 890 584.

Als Polyethylenwachse können weiterhin auch die bei der Herstellung von Polyethylenkunststoff nach dem Ziegler-Verfahren als Nebenprodukt anfallenden kürzerkettigen Anteile verwendet werden, soweit diese dem Eigenschaftsbild von Polyethylenwachsen entsprechen.

Als Polyethylenwachse sind sowohl Homopolymere des Ethylens als auch dessen Copolymere mit einem oder mehreren 1-Olefin(en) R-CH=CH2 geeignet, worin R einen geradkettigen oder verzweigten Alkylrest mit 1 bis 20 C-Atomen bedeutet. Der Comonomergehalt kann dabei zwischen 0,1 und 49 Gew.-% liegen.

Ferner können als Pfropfgrundlage auch nach dem Fischer-Tropsch-Verfahren, d. h. durch katalytische Umsetzung von Kohlenoxid mit Wasserstoff gewonnene wachsartige Kohlenwasserstoffe ("Fischer-Tropsch-Paraffine", s. hierzu Ullmann's Encyclopedia of Industrial Chemistry, 5. Aufl., Vol. A 28, Weinheim 1996, Kapitel 5) werden. Diese Wachse weisen niedrige Schmelzviskositäten auf (unterhalb 20 mPa·s, gemessen bei 140 °C).

Bevorzugt als Ausgangsmaterialien für die Pfropfung sind durch direkte Polymerisation erhaltene Polyethylenwachse, besonders bevorzugt solche, die mit Hilfe von Ziegler-oder Metallocenkatalysatoren hergestellt wurden. Gleichermaßen bevorzugt sind Fischer-Tropsch-Paraffine.

Als Pfropfmonomer kommen sowohl ein- als auch mehrbasige α, β-ungesättigte Carbonsäuren in Frage. Geeignete einbasige Säuren sind beispielsweise Acrylsäure, Methacrylsäure, Ethacrylsäure oder Crotonsäure. Beispiele für mehrbasige Säuren sind Maleinsäure oder Fumarsäure. Die Säuren können sowohl einzeln als auch zu mehreren in Mischung eingesetzt werden. Neben den freien Säuren können auch ihre Derivate verwendet werden, soweit sich die resultierenden Pfropfprodukte in der Folge zu lonomeren umsetzen lassen. Zu derartigen Derivaten zählen z. B. Ester, beispielsweise Ester der Acrylsäure wie Methylacrylat oder Anhydride, beispielsweise Maleinsäureanhydrid. Bevorzugte Pfropfkomponenten sind die Acryl- und die Methacrylsäure, besonders bevorzugt ist die Acrylsäure.

Die α, β-ungesättigte Carbonsäuren werden für die Pfropfreaktion in Mengen von 0,1 bis 60 Gew.-%, bezogen auf eingesetztes nicht funktionalisiertes Wachs, verwendet. Die Pfropfung wird in der Regel mit Hilfe eines Radikalstarters initiiert, bevorzugt einer organischen Peroxoverbindung, z. B. einem Alkylhydroperoxid, einem Dialkyl- oder Diarylperoxid oder einem Peroxoester. Die Pfropfreaktion kann in Lösung oder in der Schmelze bei Temperaturen durchgeführt werden, die der Zerfallscharakteristik des Peroxids angepasst ist. Bevorzugt ist die Umsetzung in der Schmelze.

Die Herstellung der Polyethylen-lonomeren erfolgt grundsätzlich in der Weise, dass das durch Pfropfung mit α, β-ungesättigten Carbonsäuren oder deren Derivaten erhaltene Polyethylenwachs im schmelzflüssigen Zustand oder in Lösung, bevorzugt in der Schmelze, mit einer Metallverbindung behandelt wird, die die im Wachs vorhandenen Säure- bzw. säureäquivalenten Funktionen partiell oder vollständig zu Carboxylatfunktionen umsetzt. Die verwendeten Metallverbindungen enthalten Metalle bevorzugt der Gruppen IA, IIA, IIIA, IB, IIB und VIIIB des Periodischen Systems, besonders bevorzugt Alkali- und Erdalkalimetalle sowie Zink. Als Metallverbindungen kommen allgemein solche in Frage, die sich mit Säure- oder säureäquivalenten Funktionen zu Metallcarboxylaten umsetzen lassen, z. B. Hydroxide oder Oxide. Es können auch Metallverbindungen mit Salzcharakter eingesetzt werden, insbesondere Salze von flüchtigen Säuren. Bevorzugt sind jedoch Hydroxide und/oder Oxide. Als Beispiele für Metallverbindungen seien genannt Natrium- oder Kaliumhydroxid, Calcium- und Magnesiumoxid oder -hydroxyd, Aluminiumhydroxid, ferner Zinkoxid oder -hydroxid. In einem bevorzugten Herstellverfahren wird die Schmelze des Säurewachses vorgelegt und die Metallverbindung als solche oder in Wasser gelöst oder dispergiert unter Rühren in die Wachsschmelze eingetragen. Zugesetztes Wasser sowie gegebenenfalls entstehendes Reaktionswasser kann während der Umsetzung oder im Anschluss daran durch Destillation bei Normal- oder Unterdruck und/oder durch einen Gasstrom, bevorzugt einen Inertgasstrom, entfernt werden. Die Umsetzung kann grundsätzlich diskontinuierlich oder kontinuierlich erfolgen.

Das Mengenverhältnis aus eingesetzter Metallverbindung und eingesetztem funktionalisiertern Polyethylenwachs wird so gewählt, dass ein Verseifungsgrad von mindestens 30 %, bevorzugt mindestens 50 %, besonders bevorzugt mindestens 70 % erreicht wird. Ganz besonders bevorzugt sind Verseifungsgrade zwischen 80 und 100 %. Der Verseifungsgrad gibt an, welcher prozentuale stöchiometrische Anteil der ursprünglich vorhandenen Säure- oder säureäquivalenten Gruppen zu Carboxylat umgesetzt wurde.

Das Ausmaß der Carboxylatbildung kann beispielsweise durch Bestimmung der Säurezahl oder durch IR-Spektroskopie während der Reaktion verfolgt bzw. am Endprodukt überprüft werden.

Die erfindungsgemäßen lonomerwachse weisen Schmelzviskositäten, gemessen bei 140 °C, von kleiner als 5.000, speziell bevorzugt kleiner als 1.000 mPa·s auf. Ihre Tropfpunkte liegen zwischen 70 und 135 °C, bevorzugt zwischen 90 und 130 °C.

Die lonomerwachse können durch Versprühung oder Vermahlung zu Pulvern verarbeitet und auch in dieser Form eingesetzt werden, wenn dies anwendungstechnisch erforderlich oder vorteilhaft ist. Sie sind aufgrund ihrer hohen Härte und Sprödigkeit in besonderer Weise für die Vermahlung beispielsweise auf Strahl- oder mechanischen Mühlen geeignet. Bei ausreichender Sprödigkeit können extrem kleine Partikelgrößen, beispielsweise d50-Werte von < 8 µm erreicht werden. Der d50-Wert sagt dabei aus, dass 50 % der Teilchen eine Größe unterhalb des jeweiligen Wertes aufweisen. Die lonomerwachse können auch in beliebig gröberer Form, beispielsweise als Granulat verwendet werden.

Die lonomerwachse lassen sich z. B. als Pigmentdispergiermittel bei der Einfärbung von thermoplastischen Kunststoffen mit organischen oder anorganischen Pigmenten, als Nukleierungsmittel zur Beeinflussung des Kristallisationsverhaltens und der Morphologie von thermoplastischen Kunststoffen sowie als (permanent wirksame oder migrierende) antistatisch wirksame Additive einsetzen. Sie eignen sich als Gleit- und Trennmittel für die Kunststoffverarbeitung und können zu wässrigen oder lösemittelhaltigen Dispersionen für Pflege- oder technische Anwendungen verarbeitet werden. Sie sind weiterhin als Mattierungs- und Scheuerschutzadditive für Lacke und zur Optimierung der mechanischen Stabilität und der Slipeigenschaften von Druckfarbenfilmen verwendbar.

### Beispiele:

Die Erfindung wird anhand der folgenden Ausführungsbeispiele näher erläutert.

Die Schmelzviskositäten wurden nach DIN 51562 mit einem Rotationsviskosimeter, die Tropf- bzw. Erweichungspunkte nach DIN 51801/2 bzw. DIN EN 1427 und die Säurezahlen nach DIN 53402 bestimmt. IR-spektroskopische Messungen wurden unter Verwendung des Gerätes Vector 22 (Bruker) durchgeführt.

### Beispiele 1-17

### Herstellung der mit α, β-ungesättigten Säuren gepfropften Wachse ("Wachssäuren")

Jeweils 2.500 g der in Tabelle 1, Spalte 2 aufgeführten nicht funktionellen Wachse wurden in einer mit Rührwerk, Innenthermometer und Destillationsbrücke ausgestatteten Glasapparatur unter Stickstoffüberlagerung aufgeschmolzen. Bei einer Temperatur von 140 °C wurden unter Rühren im Laufe von 3 h aus einem Dosiertrichter kontinuierlich die in Spalte 3 aufgeführte α, β-ungesättigte Säure zudosiert, gleichzeitig erfolgte aus einem zweiten Tropftrichter die kontinuierliche Zugabe von 25,0 g Di-tert.-butylperoxid. Nach Ende der Dosierung wurde die Temperatur auf 160 °C erhöht und man ließ 1 h nachreagieren. Anschließend wurde Vakuum (ca. 30 mbar) angelegt und die flüchtigen Anteile wurden abdestilliert. Nach ca. 30 min wurde durch Einleiten von Stickstoff auf Normaldruck entspannt. Schmelzviskosität und Säurezahl der resultierenden Wachssäuren sind in den Spalten 5 und 6 aufgelistet.

Als Ausgangsmaterialien wurden folgende Wachse eingesetzt:
Licocene^{®} PE 4201, Licocene^{®} PE 5301: Ethylen-Homopolymerwachse, hergestellt mit Metallocenkatalysatoren, Handelsprodukt der Fa. Clariant Produkte (Deutschland) GmbH;
Licowax^{®} PE 130: Ethylen-Homopolymerwachs, hergestellt mit einem Ziegler-Katalysator, Handelsprodukt der Fa. Clariant Produkte (Deutschland) GmbH;
Sasolwax H1: Fischer-Tropsch-Paraffin, Handelsprodukt der Fa. Sasolwax.
Umsetzung der Wachssäuren zu lonomerwachsen

Jeweils 2.500 g der durch Pfropfung erhaltenen funktionalisierten Wachse wurden in einer mit Rührwerk, Innenthermometer und Destillationsbrücke ausgestatteten Glasapparatur unter Stickstoffüberlagerung aufgeschmolzen. Bei einer Temperatur von 160 °C wurde unter wirksamem Rühren innerhalb von ca. 15 min portionsweise das in Tab. 1, Spalte 7 genannte Alkali- oder Erdalkalihydroxid in pulverförmiger Form in dem in Spalte 8 angegebenen Äquivalentverhältnis eingetragen. Es wurde noch 30 min bei 165 °C gerührt. Anschließend wurde zur Trocknung Vakuum angelegt, bis die Schmelze blasenfrei war. Die Eigenschaften der resultierenden lonomerwachse sind Tabelle 1 aufgelistet.

**Tabelle 1**

| 1 | 2 | 3 | 4 | 5 | 6 | 7 | 8 | 9 | 10 | 11 |
|---|---|---|---|---|---|---|---|---|---|---|
| Bsp. | Herstellung / Eigenschaften der Wachssäure | | | | | Herstellung des Ionomerwachses | | Eigenschaften des Ionomerwachses | | |
| | Wachsrohstoff | Säurekomponente | Einsatzmenge Säurekomponente (Gew.-%)¹⁾ | Viskosität/ 140 °C (mPa·s) | Säurezahl (mg KOH/g) | Base | Äquivalent-verhältnis Base: Wachssäure | Viskosität/ 140°C (mPa·s) | Säurezahl (mg KOH/g) | Tropfpunkt (°C) |
| 1 | Licocene^{®} PE 4201 | Acrylsäure | 7,5 | 106 | 51 | KOH | 1,00 | 120 | 2 | 120 |
| 2 | Licocene^{®} PE 4201 | Acrylsäure | 10 | 107 | 67 | KOH | 0,95 | 233 | 2 | 120 |
| 3 | Licocene^{®} PE 4201 | Acrylsäure | 15 | 93 | 95 | KOH | 0,95 | 174 | 3 | 121 |
| 4 | Licocene^{®} PE 4201 | Acrylsäure | 20 | 130 | 128 | KOH | 0,95 | 217 | 7 | 122 |
| 5 | Licocene^{®} PE 4201 | Acrylsäure | 10 | 107 | 67 | NaOH | 0,95 | 159 | 3 | 119 |
| 6 | Licocene^{®} PE 4201 | Acrylsäure | 20 | 104 | 124 | NaOH | 0,95 | 222 | 3 | 120 |
| 7 | Licocene^{®} PE 4201 | Acrylsäure | 10 | 107 | 67 | LiOH | 0,95 | 124 | 9 | 119 |
| 8 | Licocene^{®} PE 4201 | Acrylsäure | 10 | 107 | 67 | Ca(OH)2 | 0,95 | 155 | 6 | 121 |
| 9 | Licocene^{®} PE 4201 | Acrylsäure | 10 | 107 | 67 | ZnO | 0,95 | 134 | - | 121 |
| 10 | Licocene^{®} PE 4201 | Methacrylsäure | 10 | 108 | 50 | KOH | 0,95 | 109 | 4 | 123 |
| 11 | Licowax^{®} PE 130 | Acrylsäure | 10 | 908 | 63 | KOH | 0,95 | 1289 | 4 | 123 |
| 12 | Licowax^{®} PE 130 | Methacrylsäure | 10 | 852 | 57 | KOH | 0,95 | 920 | 2 | 124 |
| 13 | Licocene^{®} PE 5301 | Acrylsäure | 10 | 397 | 65 | KOH | 0,95 | 1025 | 7 | 123 |
| 14 | Licocene^{®} PE 5301 | Methacrylsäure | 10 | 660 | 51 | KOH | 0,95 | 710 | 6 | 123 |
| 15 | Ethylen-Propylen- ²⁾ Copolymerwachs ²⁾ | Acrylsäure | 10 | 410 | 65 | KOH | 0,95 | 590 | 3 | 122 |
| 16 | Sasolwax H1 | Acrylsäure | 10 | 11 | 68 | KOH | 0,95 | 11 | 4 | 110 |
| 17 | Sasolwax H1 | Acrylsäure | 20 | 14 | 118 | KOH | 0,95 | 17 | 8 | 111 |

| | | | | | | | | | | |
|---|---|---|---|---|---|---|---|---|---|---|
| ¹⁾ bez. auf eingesetzten Wachsrohstoff ²⁾ hergestellt mit einem Metallocenkatalysator gemäß EPS 0571882, Beispiel 11, Schmelzvisk./140 °C 260 mPa·s | | | | | | | | | | |

Die hergestellten lonomerwachse weisen entsprechend ihrem hohen Verseifungsgrad niedrige Säurezahlen unterhalb von 10 mg KOH/g, überwiegend unterhalb von 5 mg KOH/g auf. In den IR-Spektren sind keine oder nur geringe Absorptionssignale im Bereich der Säurecarbonylgruppe (ca. 1.700-1.710 cm-1), jedoch intensive Carboxylatbanden im Bereich 1.610-1.550 bzw. 1.420-1.300 cm-1 erkennbar.

### Beispiele V1 und V2 (Vergleichsbeispiele)

Unter Anwendung der o. g. Vorschrift zur Umsetzung von Wachssäure zu lonomerwachs wurde das durch Copolymerisation von Ethylen mit Acrylsäure hergestellte Wachs A-C 540 (Handelsprodukt der Fa. Honeywell) mit Kaliumhydroxid im Äquivalentverhältnis KOH : Wachssäure = 0,375 umgesetzt. Das Einsatzwachs wies eine Säurezahl von 41 mg KOH/g und eine Schmelzviskosität, gemessen bei 140 °C, von 486 mPa·s, das resultierende lonomerwachs zeigte eine Säurezahl von 26 mg KOH/g und eine Schmelzviskosität bei 140 °C von 3.390 mPa·s. Beim Einsatz von 0,50 Äquivalenten KOH bezogen auf eingesetzte Wachssäure war die Viskosität der Schmelze nach kurzer Zeit so hoch, dass der Rührer abgestellt werden musste.

Ein analoger Versuch mit dem Wachs A-C 580 (ebenfalls Copolymerisat aus Ethylen und Acrylsäure, Handelsprodukt der Fa. Honeywell, Säurezahl 76 mg KOH/g, Viskosität bei 140 °C, 672 mPa·s), durchgeführt mit einem Kaliumhydroxideinsatz von 0,375 Äquivalenten pro Äquivalent Wachssäure, lieferte lonomerprodukt mit einer Säurezahl 45 mg KOH/g und einer Viskosität bei 140 °C von 4.634 mPa·s.

Die Vergleichsversuche zeigen, dass die Verseifung von Wachssäuren, die durch Copolymerisation aus Ethylen und Acrylsäure hergestellt wurden, bereits bei vergleichsweise niedrigen Verseifungsgraden zu hochviskosen, in üblichen Rührverfahren nicht mehr handhabbaren lonomerprodukten führt.

## Patentansprüche

1. lonomerwachse mit einer Schmelzviskosität gemessen bei 140 °C von kleiner als 5000 mPa·s und einem Tropf- oder Erweichungspunkt im Bereich von 70 bis 135 °C, enthaltend mit alpha, beta-ungesättigten Carbonsäuren oder deren Derivaten durch radikalische Pfropfung funktionalisierte und anschließend verseifte Polyethylen- oder Fischer-Tropsch-Wachse **dadurch gekennzeichnet, dass** mindestens 30 % der im funktionalisierten Wachs enthaltenen funktionellen Gruppen verseift sind.

2. Verfahren zur Herstellung von lonomerwachsen nach Anspruch 1 durch Umsetzung von funktionalisierten Polyethylen- oder Fischer-Tropsch-Wachsen mit Metalloxid- und/oder -hydroxidverbindungen, wobei als Metalle Alkali-, Erdalkalimetalle, Zink oder Aluminium verwendet werden.

3. Verfahren nach Anspruch 2, **dadurch gekennzeichnet, dass** die nicht funktionalisierten Polymerwachse durch Polymerisation mit Hilfe von Ziegler- oder Metallocenkatalysatoren hergestellt wurden.

4. Verfahren nach Anspruch 2 oder 3, **dadurch gekennzeichnet, dass** die nicht funktionalisierten Polyethylenwachse Homopolymere des Ethylens oder Copolymere des Ethylens mit einem oder mehreren 1-Olefin(en) der Formel R-CH=CH₂ sind, worin R einen geradkettigen oder verzeigten Alkylrest mit 1 bis 20 C-Atomen bedeutet, und der Ethylengehalt im Bereich von 0,1 bis 49 Gew.-% liegt.

5. Verwendung eines lonomerwachses nach Anspruch 1 als Pigmentdispergiermittel, als Nukleierungsmittel, als Gleit- oder Trennmittel in der Kunststoffverarbeitung, als Mattierungs- oder Scheuerschutzadditiv für Lacke oder als Additiv bei der Herstellung von Druckfarbenfilmen.

6. Verwendung nach Anspruch 5, **dadurch gekennzeichnet, dass** das lonomerwachs als Pulver mit d₅₀-Wertenvon kleiner als 8 µm verwendet wird.

## Claims

1. An ionomer wax having a melt viscosity as measured at 140°C of less than 5000 mPa·s and a dropping or softening point in the range from 70 to 135°C, comprising Fischer-Tropsch waxes or polyethylene waxes which have been functionalized by free-radical grafting with alpha, beta-unsaturated carboxylic acids or their derivatives and then hydrolyzed, wherein at least 30% of the functional groups present in the functionalized wax are hydrolyzed.

2. A process for preparing an ionomer wax as claimed in claim 1 by reaction of functionalized polyethylene waxes or Fischer-Tropsch waxes with metal oxide and/or hydroxide compounds, with alkali metals, alkaline earth metals, zinc or aluminum being used as metals.

3. The process as claimed in claim 2, wherein the nonfunctionalized polymer waxes have been prepared by polymerizing using Ziegler catalysts or metallocene catalysts.

4. The process as claimed in claim 2 or 3, wherein the nonfunctionalized polyethylene waxes are homopolymers of ethylene or copolymers of ethylene with one or more 1-olefin(s) of the formula R-CH=CH₂ in which R is a straight-chain or branched alkyl radical having 1 to 20 carbon atoms and the ethylene content is in the range from 0.1 % to 49% by weight.

5. The use of an ionomer wax as claimed in claim 1 as a pigment dispersant, as a nucleator, as a lubricant or release agent in plastics processing, as a matting additive or abrasion protection additive for coating materials, or as an additive in the production of printing-ink films.

6. The use as claimed in claim 5, wherein the ionomer wax is used as a powder having d₅₀ values of less than 8 µm.

## Revendications

1. Cires monomères ayant une viscosité à chaud, mesurée à 140 °C, de moins de 5 000 mPa.s et un point de goutte ou de ramollissement dans la plage de 70 à 135 °C, contenant des cires de Fischer-Tropsch ou de polyéthylène fonctionnalisées par greffage radicalaire avec des acides carboxyliques alpha, bêta-insaturés ou leurs dérivés et ensuite saponifiées, **caractérisées en ce qu'**au moins 30 % des groupes fonctionnels contenus dans la cire fonctionnalisée sont saponifiés.

2. Procédé pour la préparation de cires ionomères selon la revendication 1, par mise en réaction de cires de Fischer-Tropsch ou de polyéthylène fonctionnalisées, avec des composés consistant en des oxydes et/ou hydroxydes de métaux, des métaux alcalins, des métaux alcalino-terreux, le zinc ou l'aluminium étant utilisés en tant que métaux.

3. Procédé selon la revendication 2, **caractérisé en ce que** les cires polymères non fonctionnalisées ont été préparées par polymérisation à l'aide de catalyseurs de Ziegler ou métallocène.

4. Procédé selon la revendication 2 ou 3, **caractérisé en ce que** les cires de polyéthylène non fonctionnalisées sont des homopolymères de l'éthylène ou des copolymères de l'éthylène avec une ou plusieurs 1-oléfine(s) de formule R-CH=CH₂, dans laquelle R représente un radical alkyle à chaîne droite ou ramifiée ayant de 1 à 20 atomes de carbone, et la teneur en éthylène se situe dans la plage allant de 0,1 à 49 % en poids.

5. Utilisation d'une résine ionomère selon la revendication 1, en tant que dispersant de pigment, en tant qu'agent de nucléation, en tant que lubrifiant ou agent de démoulage dans la transformation des matières plastiques, en tant qu'additif de matité ou anti-abrasion ou en tant qu'additif dans la production de feuils d'encre d'impression.

6. Utilisation selon la revendication 5, **caractérisée en ce que** la résine ionomère est utilisée sous forme de poudre ayant des valeurs d₅₀ inférieures à 8 µm.
